(19) Europäisches Patentamt
European Patent Office
Office européen des brevets

(11) **EP 2 832 552 B1**

(12) **EUROPEAN PATENT SPECIFICATION**

(45) Date of publication and mention
of the grant of the patent:
**08.06.2016 Bulletin 2016/23**

(51) Int Cl.:
***B41M 3/00*** *(2006.01)*    ***B41M 3/06*** *(2006.01)*
***G02B 27/22*** *(2006.01)*    ***G02B 3/00*** *(2006.01)*
***B26F 1/02*** *(2006.01)*

(21) Application number: **14179571.6**

(22) Date of filing: **01.08.2014**

(54) **Recording medium**

Aufzeichnungsmaterial

Matériau pour l'enregistrement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2013 JP 2013161450**

(43) Date of publication of application:
**04.02.2015 Bulletin 2015/06**

(73) Proprietor: **Seiko Epson Corporation
Shinjuku-ku
Tokyo (JP)**

(72) Inventors:
• **Yamashita, Tomonori**
**Suwa-shi, Nagano 392-8502 (JP)**
• **Shirotori, Hiroshi**
**Suwa-shi, Nagano 392-8502 (JP)**
• **Suzuki, Katsuhito**
**Suwa-shi, Nagano 392-8502 (JP)**
• **Sonehara, Tomio**
**Suwa-shi, Nagano 392-8502 (JP)**

(74) Representative: **Miller Sturt Kenyon
9 John Street
London WC1N 2ES (GB)**

(56) References cited:
**WO-A1-02/45968**      **US-A1- 2007 148 375**
**US-A1- 2007 263 296**      **US-A1- 2013 127 941**

## Description

[Technical Field]

The present invention relates to a target recording medium where recording is possible using a recording apparatus and relates to, in particular, a target recording medium which is configured such that a surface on one side is a lens layer which is configured by a plurality of lenses and a surface of the other side is a recording layer where recording is possible using a recording head.

[Prior Art]

Media are known in the prior art where it is possible to obtain various types of visual effects by using a lenticular lens such as, for example, stereoscopically showing images which are recorded (a 3D effect), showing images which are different by changing the viewing angle (a changing effect), and imparting movement to images by changing the viewing angle in a gradual manner (a motion effect).

The lenticular lens refers to a collection of lenses where a plurality of elongated lens elements with a semi-cylindrical shape are aligned and it is possible to obtain the various types of visual effects described above by providing images which are respectively different for the left and right eyes of an observer when images are viewed through such a lenticular lens. Then, in addiction, there is a method of recording images where ink jet recording is performed directly with regard to an ink absorbing layer of a medium, where the surface opposite to the surface where the lenticular lens is formed, is configured by the ink absorbing layer, as shown in PTL 1.

There are cases where the media which have the lenticular lens in this manner are manufactured by being cut from a large sheet into a desired size. The cutting precision at this time has a large effect on the various types of visual effects which are achieved by the lenticular lens.

For example, PTL 2 discloses an example of a process where a lens sheet with a desired size is obtained by cutting. A lens sheet manufacturing apparatus which is described in PTL 2 manufactures a lens sheet in the form of a single sheet by punching out a lens sheet raw material with a strip shape using a punching out blade with a rectangular frame which is formed from a cutting direction blade and a slicing direction blade.

The manufacturing apparatus is characterized by detecting a ridge line of a lens element which is formed in the lens sheet raw material, determining whether or not the ridge line which is detected and the cutting direction blade are parallel, and controlling the transport direction of the lens sheet raw material such that the ridge line of the lens element is parallel with regard to the cutting direction blade based on the results of the detecting and determining. Due to this, the end side (the edge) of the lens sheet, which is in the form of a single sheet which is punched out, and the lens element are reliably parallel even in a case where the end side of the lens sheet raw material and the lens element are not parallel. Accordingly, in a case of carrying out positional alignment of a recording head with the end side of the lens sheet as a reference during recording, it is possible to carry out recording so that the recording position corresponds with the alignment of the lens element with high precision. Due to this, it is possible to favorably obtain various types of visual effects.

[Citation List]

[Patent Literature]

PTL 1: Japanese Unexamined Patent Application Publication No. H7-281327
PTL 2: Japanese Unexamined Patent Application Publication No. 2010-23230

WO 02/45968 discloses a method and apparatus for direct printing on a lenticular foil, in which one or more pixel images are stored in a programmable computer. A lenticular sheet having a plurality of lenticules is placed in an inkjet printer having a printhead and a light sensor. The light sensor scans across the lenticular sheet and generates a scan data. A lenticular data is calculated based on the scan data, the lenticular data representing the lenticule spacing "MCP" or frequency. At least a portion of the pixel images are formatted with a pixel spacing based on the lenticular data and printed. The formatting aligns the pixels with the lenticules.

US 2013/127941 discloses a print apparatus performing printing on a print medium that includes a lenticular lens and an ink absorption layer that absorbs ink. The apparatus includes a print head that ejects a plurality of types of ink and a control section that controls the driving of the print head.

US 2007/263296 discloses a print medium having a structure in which a substrate has an extending portion extending from a portion fixed to a lenticular sheet and adjacent to the rectangular lenticular sheet. Printing "parallactic images", "an addressee", and "a fold" on an ink permeating layer, a print paper, and the ink permeating layer of the print medium, respectively, and folding the extending portion with respect to the "fold" facilitates bonding the portion on which the addressee is printed to the back surface of the lenticular sheet.

US 2007/148375 discloses a recording medium with a lenticular lens for ink jet recording. The recording medium includes a lenticular lens layer having a convex part surface, on which a plurality of semi-cylindrical or arcuate and elongated convexes are arranged in parallel, and a backside surface. The medium also has an ink absorptive layer provided on the backside surface of the lenticular lens layer. In the recording medium, an ink permeable layer for avoiding the stay of ink droplets on a recorded face after printing, or an adhesive layer for rendering the recording medium easily fixable to a wall, a mount and the like, or a temporarily applicable part is further provided.

[Summary of Invention]

[Problems to be Solved by the Invention]

Here, there are cases when cutting where the lens which is formed at the edge of the lens sheet is in a defective state of not being cut into a perfect semi-cylindrical shape. In more detail, when the cutting position is positioned exactly in a valley between a lens element and another lens element, the lens element which is formed at the edge has a perfect semi-cylindrical shape. However, in a case where the cutting position is positioned in the middle of a lens element, the lens element at the cutting position will not have a perfect semi-cylindrical shape.

Accordingly, when ink jet recording starts with a slicing surface of the lens element with an imperfect semi-cylindrical shape as a reference position, an image which is to be recorded originally on one of the lens elements is recorded across another lens element which is adjacent and it is not possible to favorably obtain the various types of visual effects described above as a result.

Increases in complexity and cost of the manufacturing apparatus are inevitable in order to solve such a problem in cases where cutting precision at both end pieces of the lens sheet is strictly monitored, and this also leads to increases in manufacturing time and increases in cost of the lens sheet as a result.

Here, the present invention has been carried out in consideration of these circumstances and has an object of obtaining a target recording medium (a lens sheet), where it is possible to obtain favorable visual effects, at a low cost.

[Means to Solve the Problems]

In order to solve the problems described above, a target recording medium according to a first aspect of the present invention is defined in claim 1.

According to the present aspect, the width of the lens which is formed at the end surface on the one side of the lens layer in the second direction is equivalent to the width of the lens which is adjacent to the lens which is formed at the end surface on the one side, that is, it is possible to accurately match the end surface on the one side with the valley between the lens elements and to position the end surface on the other side outside of the valley between the lens elements. When recording is performed on the target recording medium with the end surface on the one side as a reference, it is possible to prevent an image which is to be recorded on one of the lens elements from being recorded across another of the lens elements which is adjacent. Then, since it is sufficient to strictly monitor the slicing position only for the end surface on the one side, it is possible to suppress increases in complexity and cost of a slicing apparatus and it is also possible to prevent increases in cost of the target recording medium.

According to the present aspect, since the one side edge and the other side edge in the first direction or the second direction are formed with asymmetric shape, it is possible to easily and reliably perform matching when the end surface on the one side, that is, the end surface which is to be a reference is matched with the correct direction when performing recording on the target recording medium using a recording apparatus and it is possible to more reliably obtain a favorable recording result as a result.

Preferably, the overall shape forms the rectangle, and one corner section is cut out.

According to the present aspect, since the overall shape forms a rectangle and one corner section is cut out, it is possible to easily and reliably perform matching when the end surface on the one side, that is, the end surface which is to be a reference is matched with the correct direction when performing recording on the target recording medium using a recording apparatus and it is possible to more reliably obtain a favorable recording result as a result.

Preferably, an adhesive layer is provided between the lens layer and the liquid absorbing layer such that the lens layer and the liquid absorbing layer are attached to each other.

More preferably, a base layer which improves overall rigidity is provided between the adhesive layer and the liquid absorbing layer.

Preferably, a focal point distance with regard to incident light from a side of the lens layer is equivalent to a combined thicknesses of the lens layer, the adhesive layer, and the base layer.

According to the present aspect, since the focal point position is set between the base layer and the liquid absorbing layer, it is possible to favorably view an image, which is formed by ejecting liquid from the side of the liquid absorbing layer, from the side of the lens layer.

[Brief Description of Drawings]

Embodiments of the present invention will now be described by way of example only with reference to the accompanying drawings, in which:

[Fig. 1] Fig. 1(A) is a planar diagram where a lens sheet which is an example of a target recording medium according to the present invention is viewed from a lens layer side and Fig. 1(B) is a planar diagram where the lens sheet is viewed from an ink absorbing layer side.
[Fig. 2] Fig. 2 is a cross sectional diagram where the lens sheet is sliced along an x-z plane.

[Fig. 3] Fig. 3 is a cross sectional diagram where an end surface on one side of the lens sheet in an x direction is sliced along the x-z plane.

[Fig. 4] Figs. 4(A), (B), and (C) are diagrams illustrating a process of bonding a label sheet onto the lens sheet.

[Fig. 5] Fig. 5 is a perspective diagram illustrating the configuration of main sections of a printer which performs recording on the lens sheet.

[Fig. 6] Fig. 6 is a perspective diagram of the outer appearance of the printer.

[Fig. 7] Fig. 7 is a block diagram illustrating a configuration of a controller of the printer.

[Fig. 8] Fig. 8 is a side cross sectional diagram illustrating a medium transport path in the printer.

[Fig. 9] Fig. 9 is a side cross sectional diagram illustrating a transport path in the printer.

[Fig. 10] Fig. 10 is a flow chart illustrating control contents during lens sheet recording.

[Fig. 11] Fig. 11 is a diagram illustrating a positional relationship between the lens sheet, a recording head, and a PW sensor.

[Fig. 12] Fig. 12 is a diagram schematically illustrating the size of ink droplets which are ejected with regard to the lens sheet.

[Fig. 13] Fig. 13 is a planar diagram illustrating a tray where the lens sheet is held.

[Fig. 14] Fig. 14(A) and Fig. 14(B) are diagrams illustrating other embodiments of a support member.

[Fig. 15] Fig. 15(A) and Fig. 15(B) are diagrams illustrating other embodiments of a support member.

[Fig. 16] Fig. 16(A) and Fig. 16(B) are diagrams illustrating embodiments with different recording heads.

[Fig. 17] Fig. 17 is a diagram illustrating another embodiment of a medium transport path.

[Fig. 18] Fig. 18 is a diagram illustrating another embodiment of a medium transport path.

[Fig. 19] Fig. 19 is a diagram schematically illustrating positional alignment in punching out of the lens sheet.

[Description of the Embodiments]

Below, an embodiment of the present invention will be described based on the diagrams, but the present invention is not limited to the embodiment described below and various modifications are possible within the scope of the inventions which are described in the scope of the claims and embodiments of the present invention will be described later under the premise that these embodiments are also included within the scope of the present invention.

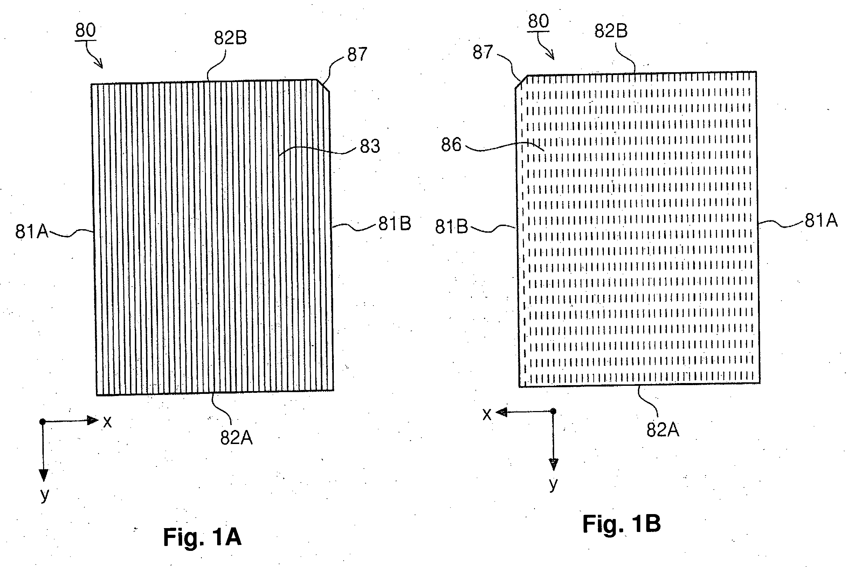

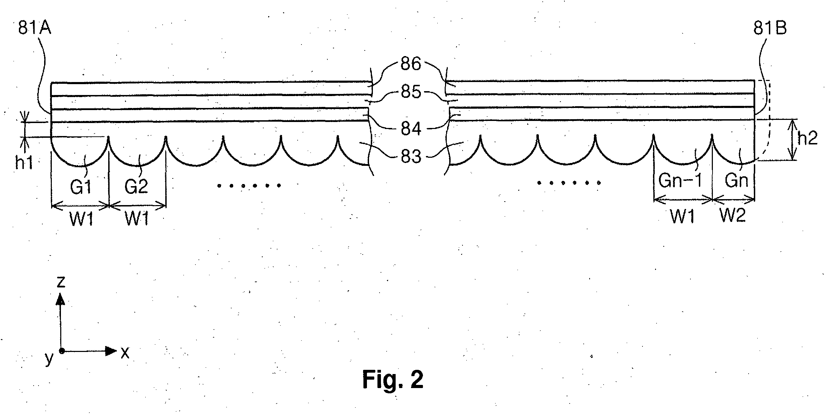

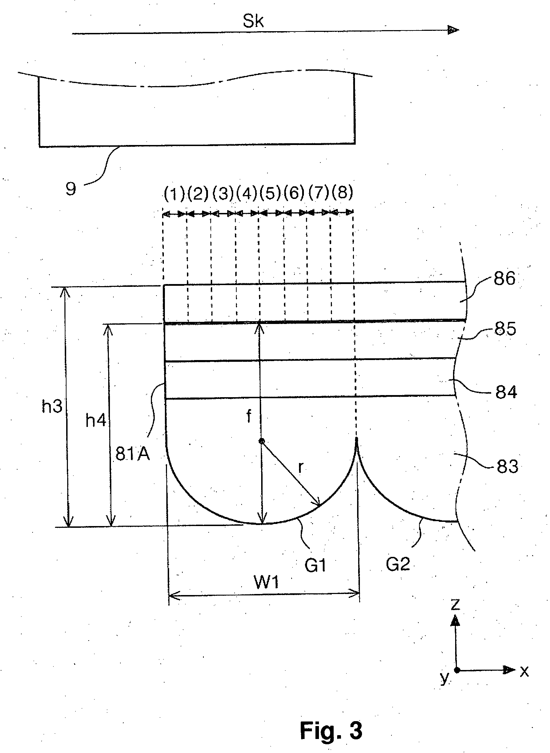

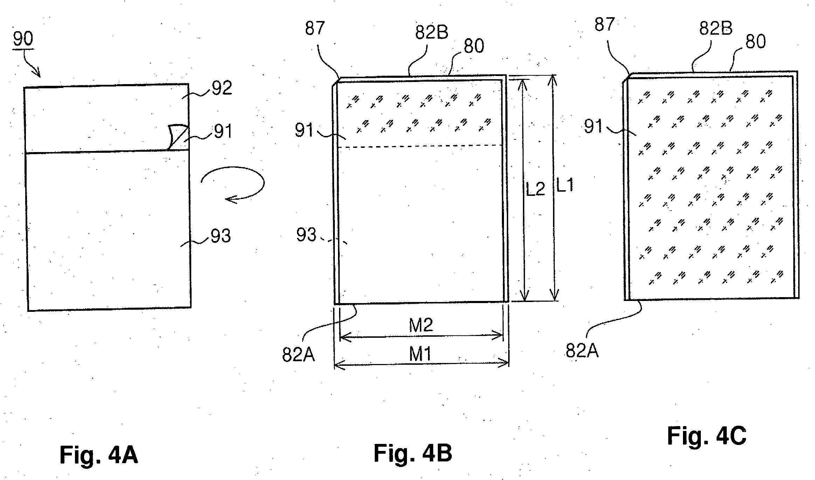

Fig. 1 (A) is a planar diagram where a lens sheet 80 which is an example of a target recording medium according to the present invention is viewed from a lens layer 83 side, Fig. 1(B) is a planar diagram where the lens sheet 80 is viewed from an ink absorbing layer 86 side, Fig. 2 is a cross sectional diagram where the lens sheet 80 is sliced along an x-z plane, Fig. 3 is a cross sectional diagram where an end surface on one side of the lens sheet 80 in an x direction is sliced along the x-z plane, and Figs. 4(A), (B), and (C) are diagrams illustrating a process of bonding a label sheet 90 onto the lens sheet 80.

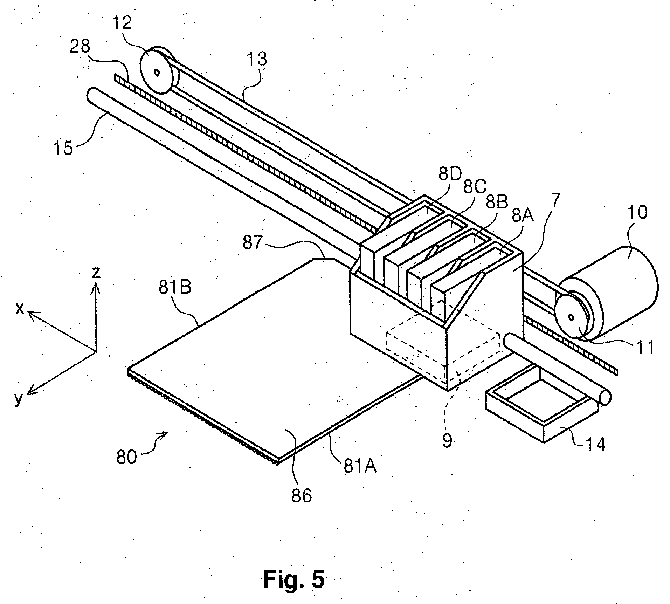

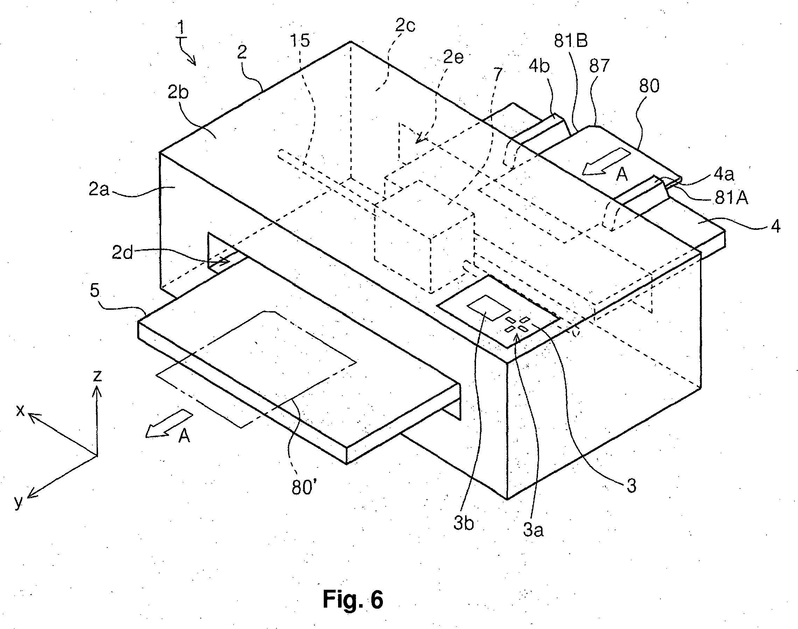

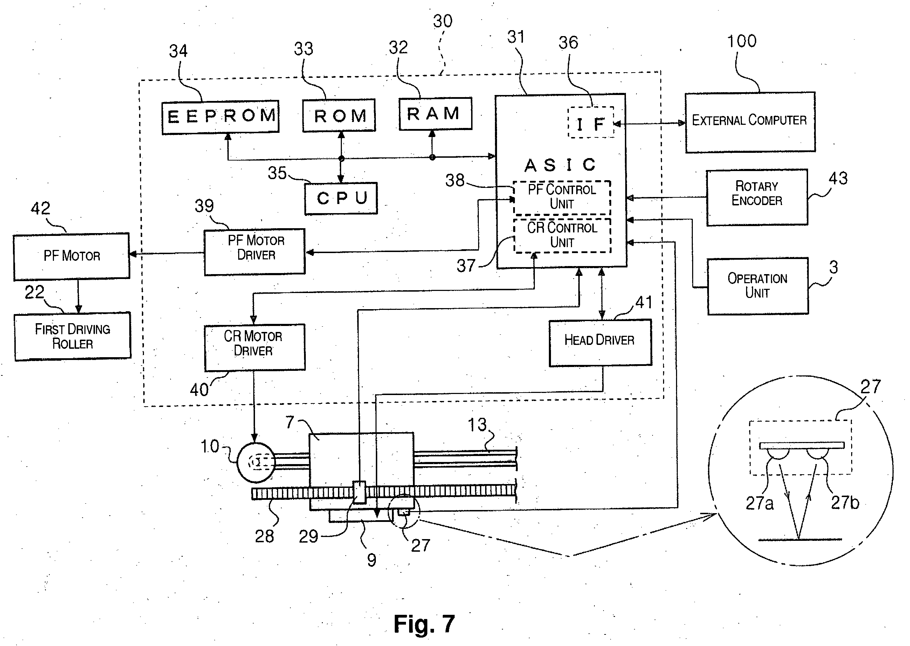

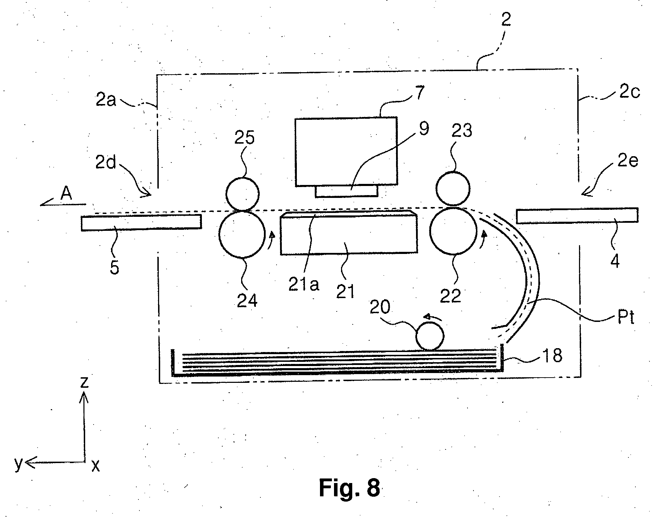

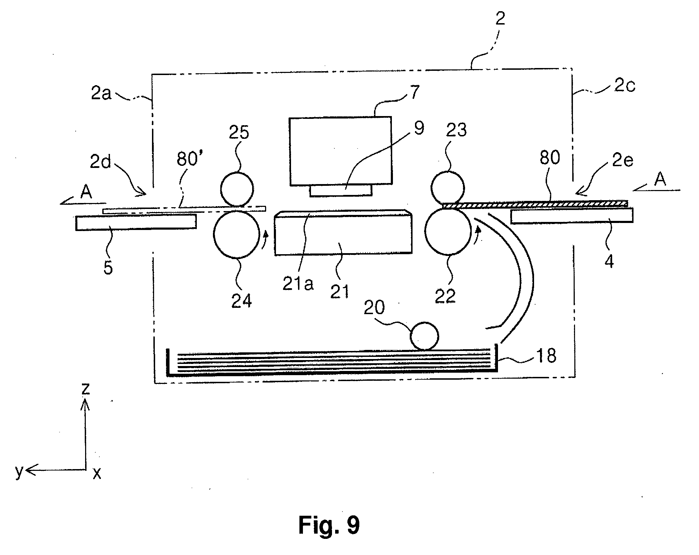

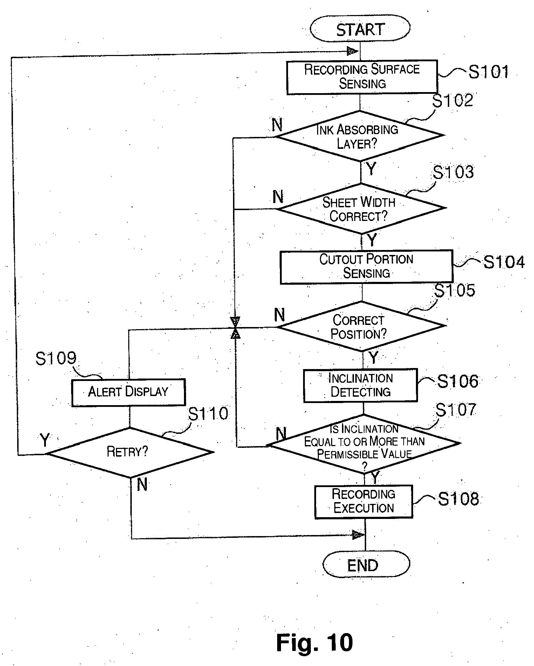

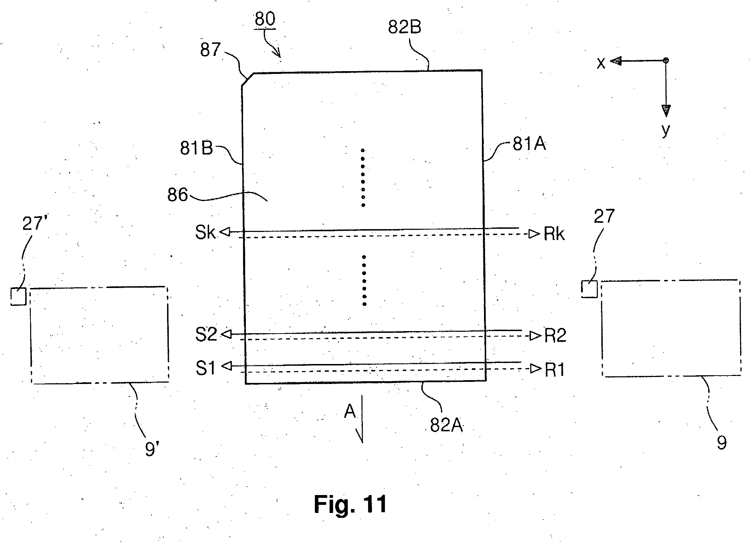

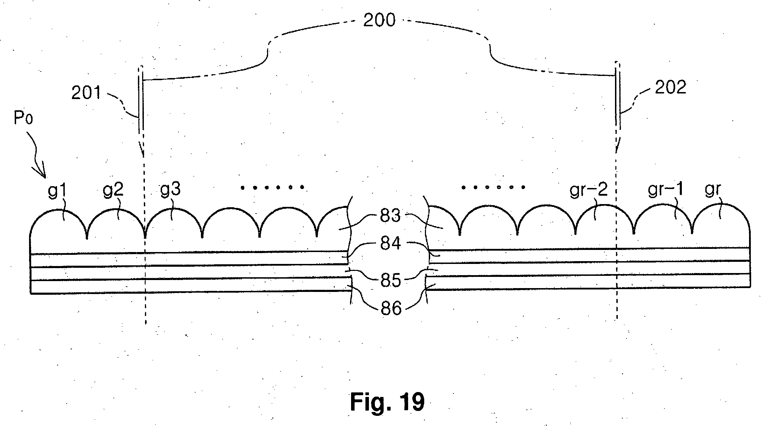

Fig. 5 is a perspective diagram illustrating the configuration of main sections of an ink jet printer (referred to below as a "printer") 1 which is an example of a recording apparatus which performs recording on the lens sheet 80, Fig. 6 is a perspective diagram of the outer appearance of the printer 1, Fig. 7 is a block diagram illustrating a configuration of a controller 30 of the printer 1, and Fig. 8 and Fig. 9 are side cross sectional diagrams illustrating a medium transport path in the printer 1. In addition, Fig. 10 is a flow chart illustrating control contents during recording onto the lens sheet 80 and Fig. 11 is a diagram illustrating a positional relationship between the lens sheet 80, a recording head 9, and a PW sensor 27. In addition, Fig. 19 is a diagram schematically illustrating positional alignment in punching out of the lens sheet 80.

Here, in the x-y-z orthogonal coordinate system shown in each of the diagrams, the x direction and the y direction are horizontal directions, where the x direction is the medium width direction (a direction which is orthogonal to a sheet transport direction) during recording and which is also the apparatus left and right direction of the printer 1. In addition, the y direction is the medium transport direction and is also the apparatus depth direction of the printer 1. Furthermore, the z direction is the direction of gravity and is also the apparatus height direction of the printer 1. The x-y-z coordinate system in Fig. 1 to Fig. 3 corresponds to the orientation of the lens sheet 80 when the lens sheet 80 is transported inside the printer 1. Here, the x direction is an example of the "second direction" of the present invention and the y direction is an example of the "first direction".

Below, the lens sheet 80 according to the embodiment of the target recording medium of the present invention will be described first in detail with reference to Fig. 1 to Fig. 4, and next, the configuration of the printer 1 which is an example of a recording apparatus which performs ink jet recording with regard to the lens sheet 80 will be described along with recording onto the lens sheet 80 using the printer 1 with reference to Fig. 5 and beyond.

1. Lens Sheet

The lens sheet 80 is provided with the lens layer 83, which is a lenticular lens which is formed by arranging a plurality of lenses Gk (where k is an integer of 1 to n), which have a semi-cylindrical cross section and which extend in the y direction, in the x direction and the ink absorbing layer 86, which is a recording layer which configures a surface on the opposite side with regard to the surface which is configured by the lens layer 83.

The lens sheet 80 is formed with an overall shape which is a rectangle and formed in the size of, for example, a postcard. Here, in Fig. 1 to Fig. 4, the edge on one side in the x direction is indicated with the reference numeral 81A and the edge on the other side is indicated with the reference numeral 81B. In addition, the edge on one side in the y direction is indicated with the reference numeral 82A, the edge on the other side is indicated with the reference numeral 82B, and each of the sides (the edges) which configure the four sides are distinguished.

An adhesive layer 84 and a base layer 85 are provided as intermediate layers in order from the lens layer 83 toward the ink absorbing layer 86 between the lens layer 83 and the ink absorbing layer 86 in Fig. 2, and each of these layers is laminated by strictly controlling the overall thickness when bonding the layers together (laminating). It is easy to monitor the overall thickness in the laminating system and it is possible to laminate each of the layers even in a case where the lens layer 83 is thick regardless of the thickness of the lens layer 83, compared to a system where sheets are fed out from a roll and the ink absorbing layer is formed on the sheets which are fed out.

The ink droplets which are ejected with regard to the ink absorbing layer 86 and which are an example of a liquid form an image by becoming attached to the ink absorbing layer 86, permeating into the ink absorbing layer 86, and being fixed at a boundary with the base layer 85.

(1) to (8) in Fig. 3 are examples of images which are formed by ejecting ink using the printer 1 which will be described later and images which are different for (1) to (8) are formed with regard to one of the lenses Gk. By forming a plurality of different images with regard to one of the lenses Gk in this manner, parallax is provided between the right eye and the left eye when viewing from the side of the lens layer 83 and a predetermined visual effect such as a 3D effect or a motion effect is generated.

Here, the ink which is ejected with regard to the ink absorbing layer 86 is fixed in the vicinity of the boundary between the ink absorbing layer 86 and the base layer 85 as described above. In order to view this from the side of the lens layer 83, the lens layer 83, the adhesive layer 84, and the base layer 85 are transparent and have substantially the same refractive index.

The reference numeral r in Fig. 3 is the radius of curvature of the lenses Gk and f is the focal point distance. The focal point distance f is given by the following formula (A).

$$1/f = [n\text{-}1] \times [(1/r) \times (1/R)] \quad \dots \text{(A)}$$

Here, n is the refractive index of the lenses Gk and R is the radius of curvature of the rear surface side (the ink absorbing layer 86 side) of the lens Gk.

Since R is infinite in the present example, it is possible to modify the formula (A) as in the manner of (A)' below.

$$f = r/(n\text{-}1) \quad \dots \text{(A)}'$$

The reference numeral h4 in Fig. 3 is equivalent to the combined thicknesses of the lens layer 83, the adhesive layer 84, and the base layer 85. The reference numeral h3 is the overall thickness of the lens sheet 80. The thickness h4 in the present example is equivalent to the focal point distance f. That is, since the focal point position is set between the base layer 85 and the ink absorbing layer 86, it is possible to favorably view the image, which is formed by ejecting ink from the side of the ink absorbing layer 86, from the side of the lens layer 83.

As long as the lens layer 83 is provided with the function of a lenticular lens, the material is not limited, but it is possible to use, for example, a resin such as PET, PETG, APET, PP, PS, PVC, acrylic, and UV curable resins.

The ink absorbing layer 86 is not particularly limited as long as it is a composition where it is possible for ink to be absorbed and fixed, but examples include water-absorbing resins such as acrylic-based resins and urethane-based resins.

The base layer 85 gives a moderate rigidity (resilience) with regard to the overall shape of the lens sheet 80 and the material is not limited as long as the light transmittance is high, and it is possible to use, for example, a resin such as PET, PETG, APET, PP, PS, PVC, or acrylic resins.

The material of the adhesive layer 84 is not limited as long as it is possible to favorably adhere the base layer 85 and the lens layer 83 and the light transmittance is high, but double-sided tape with high transparency is used in the present example. The double-sided tape may or may not have a base material and, for example, it is possible to use double-sided tape which is, for example, configured by only an acrylic-based adhesive material.

Here, an ink permeable layer may be provided on the surface of the ink absorbing layer 86. That is, the ink droplets which are ejected by the ink jet recording method may be configured so as to attach to the ink permeable layer and reach the ink absorbing layer 86 by penetrating into the ink permeable layer.

The material of the ink permeable layer is not particularly limited as long as the ink permeable layer has a function of guiding the ink droplets to the ink absorbing layer 86, but a material which has a porous structure with a water-absorbing property is suitable.

In addition, it is possible for the target recording medium to have a white background by one or both of the ink absorbing layer 86 and the ink permeable layer described above being non-transparent.

As a specific example of each of the layers, the lens pitch (a dimension W1 in Fig. 2 and Fig. 3) is 60 lpi (lensper inches). In addition, the thickness of the lens layer 83 is 0.43 mm and the refractive index is 0.1575. In addition, the adhesive layer 84 has a thickness of 0.25 mm. In addition, the base layer 85 has a thickness of 0.10 mm. In addition, the ink absorbing layer 86 has a thickness of 0.025 mm.

Here, the layers, the materials, the thicknesses, the refractive indexes, the shapes of the lenses Gk, the pitch, and the like in the configuration of the lens sheet 80 described above are examples and it is obvious that the present invention is not limited to this.

Subsequently, the edge 81A on one side in the x direction and the edge 81B on the other side are formed asymmetrically in the lens sheet 80. In detail, the edge 81B is partially cut out (a portion which is indicated by the reference numeral 87), and due to this, the edge 81A and the edge 81B are formed to have an asymmetric shape. The cutout portion 87 is a mark (an identification mark) and it is possible to easily and reliably perform matching when the end surface on the one side, that is, the end surface which is to be a reference (the edge 81A in the present example) is matched with the correct direction when recording is performed by the printer 1 which will be described later and it is possible to more reliably obtain a favorable recording result as a result.

Here, although, as an example, the cutout portion 87 forms a so-called "C plane shape" so as to form an angle at 45° with regard to the x direction and the y direction, the cutout portion 87 may form an "R plane shape" or various other shapes may be adopted without being limited to this. That is, any shape, position, or size may be used as long as it is possible for a user to identify which side the edge 81A which is a reference is.

Next, the label sheet 90 will be described with reference to Fig. 4(A) to Fig. 4(C). The label sheet 90 is bonded with regard to the ink absorbing layer 86 in order to protect the recording surface of the lens sheet 80, that is, the ink absorbing layer 86.

In more detail, the label sheet 90 has an adhesive layer on the surface on one side of a base material 91 and is in a state where detachable sheets 92 and 93 are attached to the adhesive layer (Fig. 4(A)).

The detachable sheet 92 is formed to have a length which is shorter than the detachable sheet 93 and the adhesive layer is exposed by first peeling off the detachable sheet 92 with the short length in a case where the label sheet 90 is bonded onto the lens sheet 80. Next, the adhesive layer which is exposed is faced toward the ink absorbing layer 86 of the lens sheet 80, and the edge 82A which is a lower section is put on a flat surface such as a desk in a state of light overlapping without being tightly attached, that is, the label sheet 90 is positionally aligned with regard to the lens sheet 80 with the edge 82A as a reference (Fig. 4(B)).

Next, the positions of upper section regions of the label sheet 90 and the lens sheet 80 in Fig. 4(B) are fixed by pinching a region, where the adhesive layer is exposed due to the detachable sheet 92 being peeled off, with fingers and adhering the upper section regions of the label sheet 90 and the lens sheet 80 in Fig. 4(B). Next, the remaining adhesive layer is exposed by peeling off the detachable sheet 93 at the lower side in Fig. 4(B), pinched with fingers in the same manner as the upper section region which is already bonded together, and the label sheet 90 is completely bonded with regard to the lens sheet 80.

By bonding the label sheet 90 onto the lens sheet 80 in the above manner, it is possible to easily bond the label sheet 90 onto the lens sheet 80 without deviations in position.

Here, a length L2 of the label sheet 90 is formed to be shorter than a length L1 of the lens sheet 80 and a width M2 of the label sheet 90 is formed to be shorter than a width M1 of the lens sheet 80 such that corner sections of the label sheet 90 do not protrude from the cutout portion 87 of the lens sheet 80 when bonded with the lens sheet 80 without any of the four corner sections of the label sheet 90 being cut out.

Subsequently, the edge 81A on the one side of the lens sheet 80 in the x direction and the edge 81B of the other side will be described. The thickness of the lens layer 83 at the edge 81A on the one side of the lens sheet 80 in the x direction is represented by the reference numeral h1 in Fig. 2, and the width of the lens G1 which is formed at the edge 81A is represented by the reference numeral w1. In the same manner, the thickness of the lens layer 83 at the edge 81B on the other side is represented by the reference numeral h2 in Fig. 2 and the width of the lens Gn which forms the edge 81B is represented by the reference numeral w2.

The overall shape of the cutting apparatus which forms (cuts and punches out) the lens sheet 80 is omitted from the diagrams, but a punching die 200 is shown in Fig. 19 when punching out the lens sheet 80 from a lens sheet P0 (a sheet with a size which is larger than the lens sheet 80 and which is the basis of the lens sheet 80). Since the lens sheet 80 according to the present example is a rectangle, the punching die 200 is also a rectangle along the shape of the lens sheet 80 and is configured by four blades so as to form (punch out) the four sides of the lens sheet 80. The reference numerals 201 and 202 are two blades which face each other and which configure the four blades. The other two blades are omitted from the diagram of Fig. 19.

In Fig. 19, the respective lenses are indicated by the reference numerals g1 to gr and the lens sheet 80 after punching out is shown as being configured by the lenses g3 to gr-2. That is, the lens g3 in Fig. 19 is the lens G1 in Fig. 2 and the lens gr-2 in Fig. 19 is the lens Gn in Fig. 2.

In a punching out process as shown in Fig. 19, the blade 201 is positionally aligned in the X direction in Fig. 19 and punched through between the lens g2 and the lens g3 which are adjacent.

That is, the cutting surface when cutting is performed is the edge 81A in Fig. 2 by carrying out strict monitoring such that the cutting blade (the blade 201 in Fig. 19) enters into a position precisely in the valley of the adjacent lenses gk in the present invention. The edge 81B on the other side in Fig. 2 is a slicing surface when cutting is carried out without closely monitoring the cutting position (without performing positional alignment of the cutting blade).

Accordingly, the thickness h1 of the lens layer 83 at the edge 81A is thinner than the thickness h2 of the lens layer 83 at the edge 81B as shown in Fig. 2. Here, the thickness of the overall shape of the edge 81A is thinner than the thickness of the overall shape of the edge 81B since the thicknesses of each of the layers other than the lens layer 83 are uniform.

In addition, the width w1 of the lens G1 which is formed at the edge 81A is wider than the width w2 of the lens Gn which is formed at the edge 81B on the other side, and the width w1 of the lens G1 is equivalent to the width (w1) of the lens G2 which is adjacent to the lens G1. Here, the width of the lenses Gk other than the lenses at the end sections is w1.

That is, it is sufficient if the cutting position is strictly monitored when forming the edge 81A on the one side, and it is not necessary to closely monitor the cutting position when forming the edge 81B on the other side. Accordingly, it is possible to suppress increases in complexity and cost of the cutting apparatus and it is possible to prevent increases in the cost of the lens sheet 80.

Then, when recording is performed on the lens sheet 80 with the edge 81A which is formed by being strictly sliced as a reference, it is possible to prevent an image which is to be recorded on one of the lenses Gk from being recorded across another lens which is adjacent. That is, it is possible to exactly fit the images of (1) to (8) entirely in the lens G1 in the example in Fig. 3 and it is possible to obtain a favorable visual effect.

Here, ink jet recording onto the lens sheet 80 will be described in detail later.

The lens sheet 80 according to the present invention as described above is provided with the lens layer 83 which is formed by arranging the lenses Gk, which extend in the y direction as the first direction, in a plurality of lines in the x direction as the second direction which is a direction which is orthogonal to the first direction, and the ink absorbing layer 86 which configures a surface on the opposite side with regard to a surface which is configured by the lens layer 83, where the width of a lens (G1) which is formed at the edge 81A which is the end surface on one side of the lens layer 83 in the x direction is equivalent to the width (W1) of a lens (G2) which is adjacent to the lens (G1) which is formed at the end surface on the one side.

In other words, the thickness of the edge 81A which is the end surface on the one side is thinner than the thickness of the edge 81B which is the end surface on the other side. Furthermore, in other words, the width W1 of the lens G1 which is formed at the edge 81A is wider than the width W2 of the lens Gn which is formed at the edge 81B.

Here, "the width of the lens G1 which is formed at the edge 81A is equivalent to the width of the lens G2 which is adjacent" does not have the meaning only that the width of the lens G1 and the width of the lens G2 are always completely the same, but includes some degree of error in the dimensions and has the meaning that the width of the lens G1 and the width of the lens G2 are substantially the same.

Due to this, when forming the lens sheet 80, it is sufficient if the cutting position when forming the edge 81A on the one side is strictly monitored, it is not necessary to closely monitor the cutting position when forming the edge 81B on the other side and it is possible to prevent large increases in the cost of the lens sheet 80.

Here, as a feature where it is possible to arbitrarily add to the features of the present invention described above, it is possible for the lens sheet 80 to be formed such that the overall shape of the lens sheet 80 forms a rectangle and the edge on the one side and the edge on the other side in the x direction or the y direction are formed with an asymmetric shape. That is, in order to identify the edge 81A which is a reference, the cutout portion 87 is formed in the example described above and the edge 81A and the edge 81B are formed so as to form an asymmetric form.

Due to this, it is possible to easily and reliably perform matching when the edge 81A which is to be a reference is matched with the correct direction when performing recording on the lens sheet 80 (when the lens sheet 80 is set on a tray 4), and it is possible to more reliably obtain a favorable recording result as a result.

In addition, it is possible to provide the adhesive layer 84, which adheres to the lens layer 83 and the ink absorbing layer 86, between the lens layer 83 and the ink absorbing layer 86.

In addition, it is possible for the base layer 85 to be provided between the adhesive layer 84 and the ink absorbing layer 86.

In addition, it is possible for the focal point distance f with regard to incident light from the lens layer 83 side to be equivalent to the combined thickness h4 of the lens layer 83, the adhesive layer 84, and the base layer 85. Due to this, it is possible to easily view the image, which is formed by ejecting ink from the side of the ink absorbing layer 86, from the side of the lens layer 83.

2. Printer Configuration and Recording onto Lens Sheet

Below, the configuration of the printer 1 and the recording onto the lens sheet 80 will be described in detail with reference to Fig. 5 and beyond.

===Printer Configuration==

The printer 1 according to the present embodiment performs recording with regard to a plurality of types of target recording media. In the present example, recording is performed with regard to a single sheet of paper such as normal paper or specialized paper as a "first target recording medium" which does not have the lenses described above and to the lens sheet 80 as a "second target recording medium". Here, the "first target recording medium" described above is referred to below as a "sheet P" as appropriate. In addition, in a case where it is not particularly necessary to distinguish between the lens sheet 80 and the sheet P, these will be referred to generically as the "medium" as appropriate.

The reference numeral 9 in Fig. 5 indicates an ink jet recording head (below, "recording head") which ejects ink as an example of a liquid with regard to the medium. The recording head 9 is provided in a bottom section of a carriage 7 and the carriage 7 moves back and forth in the x direction while being guided by a carriage guiding shaft 15 which extends in the x direction.

The carriage 7 is provided with ink cartridges 8A, 8B, 8C, and 8D which are able to be freely attached and detached and ink is supplied to the recording head 9 from each of the ink cartridges 8A to 8D. The ink cartridges 8A to 8D correspond to inks of different colors, for example, each color of magenta, cyan, yellow, and black.

The reference numeral 10 is a motor (referred to below as "CR motor") which is a driving source of the carriage 7 and the reference numeral 11 indicates a driving pulley which is attached to a driving shaft of the CR motor 10. The reference numeral 12 indicates a driven pulley which is able to be driven and rotate and an endless belt 13 is wound around the driving pulley 11 and the driven pulley 12. The carriage 7 is fixed to a portion of the endless belt 13, and due to this, the endless belt 13 is operated and the carriage 7 moves in the x direction when the driving shaft of the CR motor 10 rotates.

The reference numeral 14 is a cap, the cap 14 caps the recording head 9 by the carriage 7 being moved to the upper section of the cap 14, and drying of the nozzle opening (which is not shown in the diagram) which ejects ink is prevented or maintenance such as ink suction from the nozzle opening is performed. Here, the side (the x side) in the printer 1 where the cap 14 is provided in the back and forth movement region of the carriage 7 is the home position side.

The reference numeral 28 is a linear scale and this will be described later.

Next, the outer appearance of the apparatus which is the printer 1 as shown in Fig. 6 is configured by a housing 2. The reference numeral 2a indicates a front surface (below "apparatus front surface") out of the surfaces which configure the surroundings of the housing 2, the reference numeral 2b indicates an upper surface (below "apparatus upper surface"), and the reference numeral 2c indicates a rear surface (below, "apparatus rear surface").

An operation unit 3 is provided on the apparatus upper surface 2b at a position which is close to the apparatus front surface 2a in the apparatus depth direction and at a position on the right side when viewed from the front side of the apparatus. The operation unit 3 is formed by providing operation buttons 3a which consist of a power button, various types of print setting buttons, and the like, and a display section 3b which shows various types of contents such as setting contents and the state of the apparatus.

A sheet discharge opening 2d is formed as a "discharge section" on the apparatus front surface and the sheet P where recording is performed is discharged from the sheet discharge opening 2d. An opening section 2e is formed on the apparatus rear surface 2c and the lens sheet 80 is fed via the opening section 2e. The arrow A in Fig. 6, Fig. 8, and Fig. 9 is in a direction (the first direction) from the apparatus rear surface 2c toward the apparatus front surface 2a. The reference numeral 5 indicates a tray which receives the sheet P or the lens sheet 80 which is discharged in the A direction by recording being performed.

The reference numeral 4 is a tray which functions as a "holding section" where the lens sheet 80 is held before the start of recording. The tray 4 is a tray which is provided horizontally in the present example. Edge guides 4a and 4b are provided in the tray 4 to be spaced at predetermined intervals in the x direction.

In the present example, the medium is fed and transported with the center in the width direction as a reference. The edge guides 4a and 4b are provided to slide in synchronization in the width direction of the medium (the x direction) by matching the size of the medium. In addition, each of the rollers which will be described later and which transport the medium is arranged symmetrically to the left and right with the center in the width direction as a reference and roller load is applied equally to the left and right with regard to the center in the width direction of the medium and it is possible to prevent skew due to this.

Next, in the present example, the sheet P is fed from a sheet cassette 18 which will be described later, recording is performed on the sheet P, and the sheet P is discharged in the A direction toward the tray 5 and is supported by the tray 5. The tray 5 is a tray which is provided horizontally in the present example. The lens sheet 80 is sent out from the tray 4 on the apparatus rear surface 2c side in the A direction, recording is performed on the lens sheet 80, and the lens sheet 80 is discharged in the A direction toward the tray 5 which is provided on the apparatus front surface 2a side and is supported by the tray 5 (reference numeral 80').

Here, the edge guides 4a and 4b which are provided in the tray 4 guide the edges of the lens sheet 80 exclusively before recording in the present example, but the sheet P or the like with a thickness with little flexibility (which does not bend easily) may be sent out from the tray 4 on the apparatus rear surface 2c side in the A direction, recording may be performed on the sheet P, and the sheet P may be discharged in the A direction toward the tray 5 on the apparatus front surface 2a side in the same manner as the lens sheet 80.

Subsequently, a medium transport path in the printer 1 will be described with reference to Fig. 8 and Fig. 9. The sheet cassette 18 which accommodates the sheet P is provided in a bottom section of the apparatus. A feeding roller 20 is provided to be able to advance and retract with regard to the sheet P which is accommodated in the sheet cassette 18, the sheet P is sent out in the direction of the apparatus rear surface side due to the rotation of the feeding roller 20, and the sheet P reaches a first driving roller 22 and a first driven roller 23 which configure the medium transport means by being curved and inverted. A dashed line Pt in Fig. 8 indicates the transport trajectory of the sheet P.

The sheet P is transported to a position (a recording region) which faces the recording head 9 by being nipped by the first driving roller 22 which is driven to rotate and the first driven roller 23 which is rotated by being driven. The reference numeral 21 is a support member which supports the medium. In addition, the reference numerals 21a are ribs which are formed on the support member 21 and which support the medium. A plurality of the ribs 21a are provided to extend in the y direction and to be spaced at appropriate intervals in the x direction.

A second driving roller 24 and a second driven roller 25, which transport the sheet P where recording is performed toward the tray 4 and which configure a medium transport means, are provided on the apparatus front surface 2a side with regard to the recording head 9. The sheet P is discharged in the A direction toward the tray 5 by being nipped by the second driving roller 24 which is driven to rotate and the second driven roller 25 which is rotated by being driven.

On the other hand, the lens sheet 80 is sent from the tray 4 as shown in Fig. 9 to a position which faces the recording head 9 by being nipped by the first driving roller 22 and the first driven roller 23 which is rotated by being driven, and recording is performed. Then, the lens sheet 80 is discharged in the A direction toward the tray 5 as shown by the reference numeral 80' by being nipped by the second driving roller 24 and the second driven roller 25.

As described above, in the printer 1, the lens sheet 80 is transported from the tray 4 which is a holding section to a region (a recording region) which faces the recording head 9, recording is performed on the lens sheet 80, and the lens sheet 80 is discharged toward the tray 5. Here, the transport direction of the lens sheet 80 when recording is performed may be the A direction in Fig. 9 or may be the opposite direction.

When recording is performed on the front end of the lens sheet 80 in a case where the transport direction of the lens sheet 80 when recording is performed is the A direction, the lens sheet 80 is nipped by the first driving roller 22 and the first driven roller 23 without being nipped by the second driving roller 24 and the second driven roller 25. Then, when recording is performed on the rear end of the lens sheet 80, the lens sheet 80 is nipped by the second driving roller 24 and the second driven roller 25 without being nipped by the first driving roller 22 and the first driven roller 23.

Here, when the rear end of the lens sheet 80 is separated from between the first driving roller 22 and the first driven roller 23 in a case where the transport direction of the lens sheet 80 when recording is performed is the A direction, there are cases where a phenomenon (kicking) where the transport amount is temporarily increased by the rear end of the sheet being pushed out from between both of the rollers is generated and the recording quality decreases. However, since the direction in which the lenses Gk of the lens sheet 80 extend and the sheet transport direction are parallel, there is no effect with regard to the position alignment of the respective images (1) to (8) on each of the lenses Gk in Fig. 3 and it is possible to obtain a favorable recording result even when kicking is generated.

Next, the controller 30 as a control means which performs various types of control and the peripheral configuration of the controller 30 will be described with reference to Fig. 7. A linear sensor 29 which configures a means which detects the carriage speed is provided on the rear surface side of the carriage 7. The linear sensor 29 is formed by being provided with a light emitting section (which is not shown in the diagram) and a light receiving section (which is not shown in the diagram) and is provided such that the linear scale 28 (refer also to Fig. 5) which extends along the x direction is interposed between the light emitting section and the light receiving section. In accordance with movement of the carriage 7, the linear sensor 29 transmits a rectangular wave signal, which accompanies the passage through numerous slits which are formed in the linear scale 28, to the controller 30 and it is possible for the controller 30 to register the position and the speed of the carriage 7 in the x direction due to this.

Next, the first driving roller 22, the second driving roller 24, and the feeding roller 20 described above are driven by a PF motor 42. Out of these, at least one out of the driving target which is driven to rotate by the PF motor 42, that is, the rollers described above or a gear, a pulley, or the like which transfers power with regard to the rollers described above is provided with a rotary scale (which is not shown in the diagram) with a disk shape which configures a rotation detecting means and the rotary scale is read by a rotary encoder 43. Here, the reference numeral 39 is a PF motor driver which controls the PF motor 42.

In accordance with rotation of the PF motor 42, the rotary encoder 43 transmits a rectangular wave signal, which accompanies the passage through the numerous slits which are formed in the rotary scale, to the controller 30 and it is possible for the controller 30 to register the amount of rotation and the rotation speed of various types of driving targets which are driven by the PF motor 42 due to this.

The PW sensor 27 is provided as a means which detects the medium on a lower surface of the carriage 7, that is, the surface which is able to face the medium. The PW sensor 27 is provided with a light emitting section 27a which emits light with regard to the medium and a light receiving section 27b which receives reflected light from the medium as shown in the enlarged diagram of Fig. 7.

Since the PW sensor 27 faces the support member 21 and the reflectivity of an upper surface of the support member 21 and the medium is different, it is possible for the controller 30 to register the presence or absence of the medium, the edge (the y direction edge and the x direction edge) positions of the medium, the reflectivity of the medium surface, and the like when a signal which indicates the intensity of the received light of the light receiving section 27b is sent out to the controller 30.

Subsequently, a RAM 32, a ROM 33, an ASIC 31, a CPU 35, and an EEPROM (a nonvolatile memory) 34 are connected with the system bus of the controller 30. Output signals from the rotary encoder 43, the linear encoder 29, the operation unit 3, and the like are input into the CPU 35 via the ASIC 31. The CPU 35 performs a calculation process for executing recording control of the printer 1 and other necessary calculation processes based on the output signals or the like of each of the sensors or the switches.

Recording control programs (firmware) and the like which are necessary for controlling of the printer 1 by the CPU 35 are stored in the ROM 33 and various types of data and the like which are necessary for the processes of the recording control program are stored in the EEPROM 34. The RAM 32 is used as an operation region for the CPU 35 or a temporary storage region for recorded data or the like.

The ASIC 31 has a control circuit for performing rotation control of the PF motor 42 and the CR motor 10 which are DC motors and driving control of the recording head 9. The reference numeral 37 is a CR control section which performs rotation control of the CR motor 10 and the CR control unit 37 calculates the present speed of the carriage 7 based on the pulse signal (the pulse cycle) which is output from the linear encoder 29 and carries out PID control (feedback control) of driving of the CR motor 10 every time a short period of time elapses (a control step which is also referred to as a PID control cycle) such that the speed of the carriage 7 follows a speed profile which is determined in advance. Here, the reference numeral 40 is a CR motor driver which controls the CR motor 10.

In the same manner, a PF control unit 38 also calculates the present rotation speed of each of the driving targets (a value which is proportional to the amount of rotation) based on the pulse signal (the pulse cycle) which is output from the rotary encoder 43 and carries out PID control (feedback control) of driving of the PF motor 42 such that the speed of each of the driving targets follows a speed profile which is determined in advance.

In addition, the ASIC 31 carries out driving control of the recording head 9 by calculating and generating a control signal for the recording head 9 based on the recorded data, which is sent out from the CPU 35, and the like and sending out the control signal to a head driver 41. Furthermore, the ASIC 31 has an IF 36 which realizes information transfer with an external computer 100 or the like as an information processing apparatus.

===Control During Lens Sheet Recording===

The above is the configuration of the printer 1 and controlling when recording is performed on the lens sheet 80 will be described next with reference to Fig. 10 and other diagrams.

When the execution of recording is instructed due to an operation by a user in a state where the lens sheet 80 is held on the tray 4 and the front end of the sheet is inserted by a predetermined amount between the first driving roller 22 and the first driven roller 23, the lens sheet 80 is sent to a position which faces the recording head 9.

Next, sensing is carried out by the PW sensor 27 so as to cut across the entirety of the lens sheet 80 in the width direction (the x direction) (step S101). Due to this sensing, it is first determined whether or not the upper surface which faces the recording head 9 is the ink absorbing layer 86 using the reflected light from the lens sheet 80. As a result, in a case where the upper surface is not the ink absorbing layer 86 (No in step S102), an alert is displayed on the display section 3b (step S109) and the user is prompted to invert the front and back of the lens sheet 80. Here, the intensity of the reflected light is higher for the lens layer 83 compared to the ink absorbing layer 86.

Next, in a case where it is possible to determine that the upper surface which faces the recording head 9 in the lens sheet 80 is the ink absorbing layer 86 (Yes in step S102), it is determined whether or not the sheet width which is obtained by the sensing is correct (step S103). That is, it is determined whether the orientation of the setting of the lens sheet 80 is the vertical direction or the horizontal direction, and it is determined whether the orientation of the setting is correct in light of the driver information which indicates the current printing contents. As a result, in a case where it is possible to determine that the lens sheet 80 is not set to the correct orientation (No in step S103), an alert is displayed on the display section 3b (step S109) and the user is prompted to set the lens sheet 80 correctly.

Here, other than the sheets where the lenses Gk extend along the vertical direction of the sheet (the direction where the length is long) in the lens sheet 80 as shown in Fig. 1, there are also sheets of a type where the lenses Gk extend along the horizontal direction of the sheet (the direction where the length is short). Since the sheet transport direction and the lens extension direction are parallel in either case, the case of the latter type is different to the lens sheet 80 shown in Fig. 1 and the orientation of the sheet setting is different. Accordingly, the detecting of the sheet setting orientation according to step S103 not only prevents mistakes in the orientation of the setting for the same sheets but is also able to prevent mistakes in the sheet type.

In a case where it is possible to determine that the lens sheet 80 is set to the correct orientation (Yes in step S103), detecting of the cutout portion 87 is performed (step S104). Detecting of the cutout portion 87 is carried out by sequentially sensing, for example, the edge positions of the edges 81A and 81B along the y direction.

Here, the orientation of the appropriate setting of the lens sheet 80 in the present example is an orientation where the edge 81A (the edge which is a reference) is positioned on the home position side of the carriage 7 as shown in Fig. 6 and the edge 81B where the cutout portion 87 is formed is positioned on the opposite side to the home position side.

In a case where the cutout portion 87 is positioned on the home position side, that is, in a case where it is possible to determine that the lens sheet 80 is not set to the correct orientation (No in step S105) as a result of detecting the cutout portion 87, an alert is displayed on the display section 3b (step S109) and the user is prompted to set the lens sheet 80 correctly. In a case where the cutout portion 87 is positioned on the opposite side to the home position side, that is, in a case where it is possible to determine that the lens sheet 80 is set to the correct orientation (Yes in step S105), detecting of the inclination of the lens sheet 80 is performed (step S106).

It is possible for detecting of the inclination of the lens sheet 80 to calculate the inclination of the lens sheet 80 in the x-y plane by detecting the edge positions at at least two points along the edge direction for at least one edge out of the edges 81A to 81D of the lens sheet 80. Here, in a case where the edge positions of predetermined edges are already detected at two or more points in the cutout portion sensing in step S104, the inclination of the lens sheet 80 may be calculated using the edge positions which are detected.

In a case where the inclination of the lens sheet 80 exceeds a permissible value which is determined in advance (No in step S107), an alert is displayed on the display section 3b (step S109) and the user is prompted to reset the lens sheet 80. In a case where the inclination of the lens sheet 80 is equal to or less than the permissible value which is determined in advance (Yes in step S107), recording is executed onto the lens sheet 80 (step S108). The recording onto the lens sheet 80 is performed by alternately executing ink ejecting from the recording head 9, which accompanies the movement operation of the carriage 7, and an operation of sending the lens sheet 80 by a predetermined amount.

Here, in a case where a retry instruction is issued due to an operation by the user after the alert is displayed in step S109 (Yes in step S110), the processes from step S101 are performed again. In a case where a retry instruction is not issued (in a case of a print stopping process), the process is finished (No in step S110).

The above is an example of the flow of the recording operation with regard to the lens sheet 80 and the features of the recording operation will be described later.

First, it is basically possible for the controller 30 to execute a bidirectional recording mode, where ink is ejected from the recording head 9 in both a period where the medium and the recording head 9 move relatively in predetermined directions and a period where the medium and the recording head 9 move in the reverse direction to the predetermined direction, and a single direction recording mode, where ink is ejected from the recording head 9 only in a period where the medium and the recording head 9 move relatively in a predetermined direction. In a case where the sheet P which does not have a lens such as normal paper or specialized paper is set as the medium, it is possible to select from among the two recording modes described above, and the respective recording modes are selected for every print job based on driver information such as the print quality and the print speed.

In contrast to this, in a case where recording is performed on the lens sheet 80, only the single direction recording mode is selected.

Here, the "predetermined direction" described above in the bidirectional recording mode and the single direction recording mode in a case where the sheet P which does not have a lens such as normal paper or specialized paper is set as the medium may be the movement direction from the home position side of the carriage 7 toward the opposite direction or may be the reverse direction to the movement direction.

Basically, the "predetermined direction" described above in the single direction mode in a case where the lens sheet 80 is set as the medium may be the movement direction from the home position side of the carriage 7 toward the opposite direction or may be the reverse direction to the movement direction, but the movement direction is limited with regard to the lens sheet 80 as follows.

That is, the controller 30 of the printer 1 according to the present invention controls the recording head 9 (and the carriage 7) so as to perform recording from the side of the reference, which is set as the edge of the one side in the x direction which is a direction which intersects with the transport direction, toward the edge on the other side when ink is ejected from the recording head 9 so as to form an image which corresponds to each of the lenses of the plurality of lenses Gk.

In Fig. 3 and Fig. 11, Sk (where k is an integer of 1 or more) indicates passes (scanning) and the direction of the passes during ink ejecting by the recording head 9. As shown in the diagrams, the controller 30 performs recording with the edge 81A which is formed by being strictly sliced as a reference.

That is, the passes Sk are all performed from the edge 81A which is the reference side toward the edge 81B on the other side and the images (1) to (8) in the example in Fig. 3 are formed in order. When the carriage 7 moves from the edge 81B on the other side toward the edge 81A on the reference side, ejecting of ink is not performed.

In other words, the "predetermined direction" in the "single direction recording mode where ink is ejected from the recording head 9 only in a period where the medium and the recording head 9 move relatively in a predetermined direction" in the present example is the direction in which the recording head 9 moves from the edge 81A on the reference side to the edge 81B on the other side.

The edge 81A is an edge which is formed by slicing with high precision at a valley position in the lenses Gk as described above, and accordingly, by performing recording with the edge 81A as a reference, it is possible to prevent the images (1) to (8) which are to be recorded on one of the lenses Gk being recorded across another lens which is adjacent and it is possible to obtain a favorable visual effect.

In addition, since it is possible to perform recording with high precision by performing recording from the edge 81 A which is a reference side toward the edge 81B which is the other side, it is possible to easily record the images which are to be recorded with regard to each of the lenses with high precision without performing complicated controlling.

Here, the controller 30 performs a pass Rk (where k is an integer of 1 or more) prior to the pass Sk. That is, at the start of the recording operation, the recording head and the PW sensor are respectively at the positions which are shown by the reference numerals 9' and 27' in Fig. 11 (the opposite side with regard to the edge 81A which is the reference), and when the recording head and the PW sensor move (pass R1) from these positions to the positions which are shown by the reference numerals 9 and 27 (the side of the edge 81A which is the reference), the position of the edge 81A which is the reference side is detected using the PW sensor 27 and the edge position which is detected is set as the recording start position of the next pass (pass S1).

Below, the position of the edge 81A is detected in the pass Rk in the same manner and the edge position which is detected is set as the recording start position of the next pass Sk. Due to this, it is possible to perform recording with high precision even when the lens sheet 80 is slightly inclined.

Here, the PW sensor 27 in the present example is provided at a position (the upper side in Fig. 11) which is on the opposite side (the left side in Fig. 11) to the home position side with regard to the recording head 9 in the x direction and which is offset in the opposite direction to the A direction in the y direction. However, this is an example and the PW sensor may be provided at other positions.

Here, in a case where recording is performed on the lens sheet 80, the movement speed of the carriage 7 (the recording head 9) during ink ejecting (the pass Sk) may be a slower speed than the movement speed of the carriage 7 (the recording head 9) when recording is performed on the sheet P such as normal paper. Due to this, it is possible to land the ink droplets with high precision with regard to each of the lenses Gk.

In addition, in the same manner, the movement speed of the carriage 7 in the pass Rk during edge detecting may be a slower speed than the movement speed of the carriage 7 (the recording head 9) when recording is performed on the sheet P such as normal paper. Due to this, it is possible to detect the edge position of the edge 81A which is the reference with high precision. In addition, for the same reason, the movement speed of the carriage 7 in the pass Rk during edge detecting may be a slower speed than the movement speed of the carriage 7 during the pass Sk during ink ejecting. Here, the movement speed of the carriage 7 in the pass Rk during edge detecting may be slower as described above only before and after crossing across the edge 81A and faster in the other regions. Due to this, it is possible to detect the edge position of the edge 81A which is the reference with high precision while suppressing a decrease in the throughput.

In addition, in the controlling shown in Fig. 10, the user is prompted to reset the lens sheet 80 in a case where the orientation of the edge 81 A which is the reference is not correct as a result of detecting of the cutout portion 87 in step S104, but since it is confirmed which side the edge 81A which is the reference is (the home position side or the opposite side to the home position side) due to the detecting of the cutout portion 87, control may be carried out so as to perform recording from the side of the edge 81A which is confirmed based on the detection result of the cutout portion 87.

## 3. Other Examples

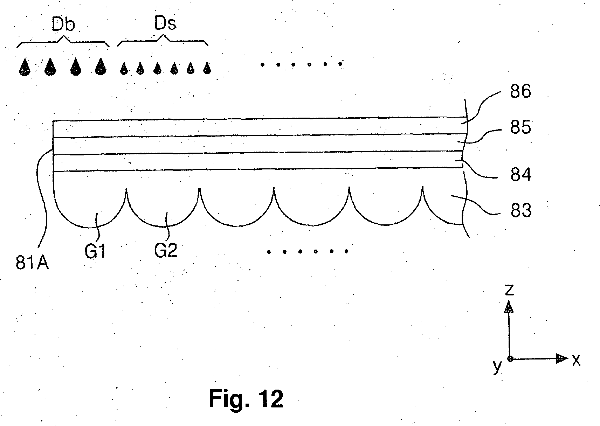

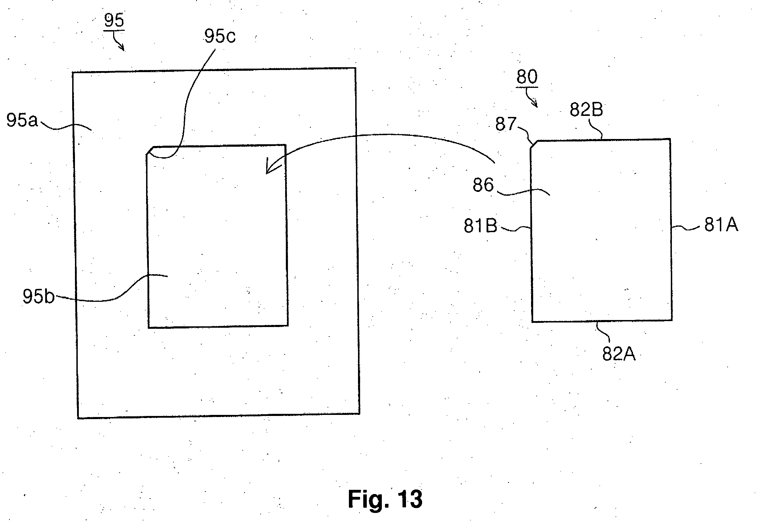

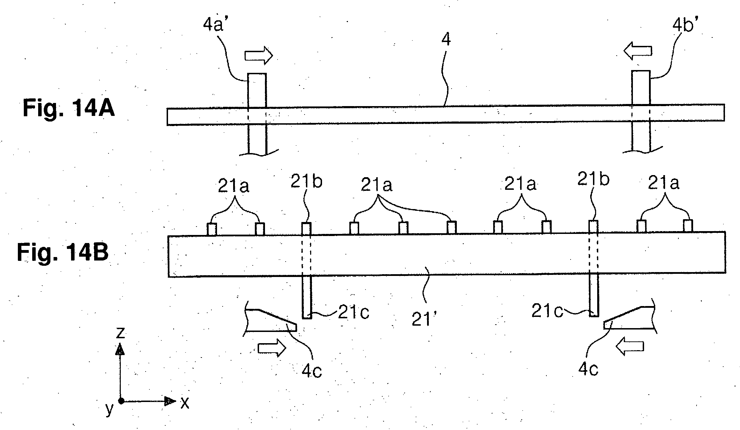

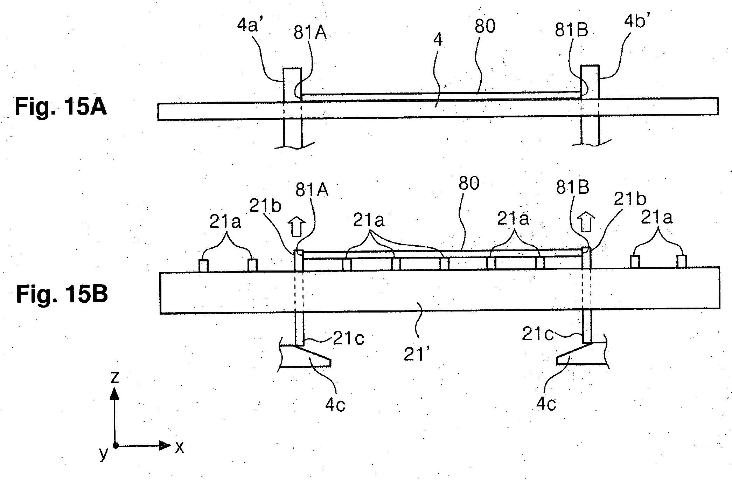

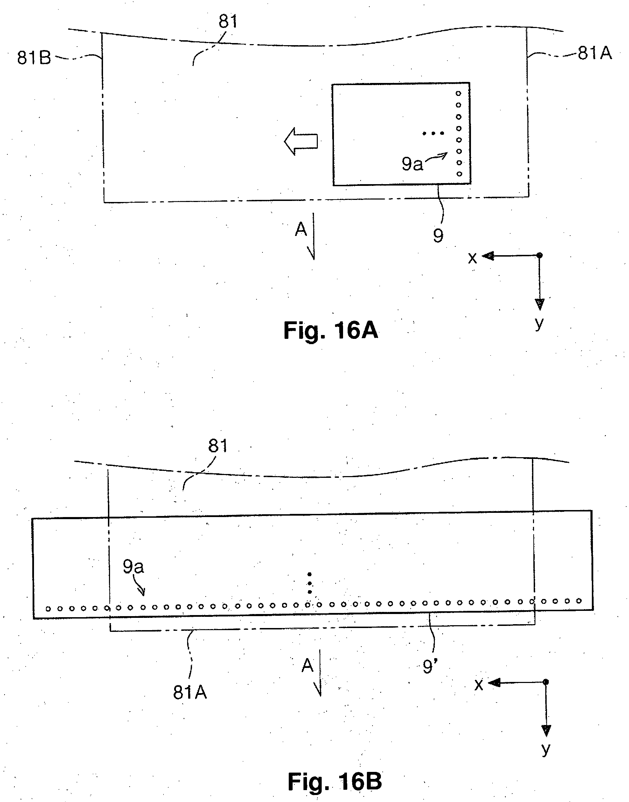

Below, the features (1) to (6) which are able to be further arbitrarily added to the examples described above will be described with reference to Fig. 12 and beyond. Fig. 12 is a diagram schematically illustrating the size of ink droplets which are ejected with regard to the lens sheet 80, Fig. 13 is a planar diagram illustrating a tray 95 where the lens sheet 80 is held, and Fig. 14(A), Fig. 14(B), Fig. 15(A), and Fig. 15(B) are diagrams illustrating other embodiments of a support member. In addition, Fig. 16(A) and Fig. 16(B) are diagrams illustrating embodiments with different recording heads.

===(1)===

As shown in Fig. 12, it is possible for the particle diameter of ink Db which is ejected from the recording head 9 toward regions at both end sections of the lens sheet 80 to be larger than the particle diameter of ink Ds which is ejected toward a region which is between the regions at both end sections.

That is, in a case of performing so-called borderless recording where recording is performed without a margin at the end sections of the lens sheet 80, there is a concern that a portion of ink, which is discarded in a region which is separated from the end section of the lens sheet 80, will float due to becoming a mist, foul the lens sheet 80 by being reattached to the lens sheet 80, and have an adverse effect on the constituent components of the apparatus due to becoming attached. Here, the end section of the lens sheet 80 has the meaning of either of the end section in the width direction (the x direction) or the end section in the transport direction (the y direction).

Therefore, by the particle diameter of the ink Db which is ejected from the recording head 9 toward the regions of both end sections of the lens sheet 80 being larger than the particle diameter of the ink Ds which is ejected toward the region between the regions of both end sections as described above, there is a tendency for the ink Db which is discarded to a region which is separated from the end section of the lens sheet 80 to fall and it is possible to suppress the ink from becoming a mist and floating.

===2===

As shown in Fig. 13, the lens sheet 80 may be set in the tray 95, transported inside the printer in a state of being set in the tray 95, and recording may be performed on the lens sheet 80 in this manner.

The reference numeral 95b in Fig. 13 indicates a concave section which is formed in a shape which corresponds to the outer shape of the lens sheet 80. The concave section 95b has a cutout portion 95c in a position which corresponds to the cutout portion 87 of the lens sheet 80.

In addition, the concave section 95b is formed with a depth which corresponds to the thickness of the lens sheet 80 and is configured such that an upper surface 95a of the tray 95 and an upper surface of the ink absorbing layer 86 are flush in a state where the lens sheet 80 is set in the concave section 95b.

In a configuration where recording is performed by the recording head 9 in a state where the lens sheet 80 is held in the tray 95 as above, it is possible to carry out transporting by stabilizing the transport path in the printer 1 even in a case where the size of the lens sheet 80 is small.

===(3)===

As shown in Fig. 14(A), Fig. 14(B), Fig. 15(A), and Fig. 15(B), there may be a configuration such that ribs 21b move up and down in conjunction with displacement of edge guides 4a' and 4b', and both edges of the lens sheet 80 are guided. Here, the tray 4 and a support member 21' are provided at substantially the same position in the z direction (the height direction), but the tray 4 and the support member 21' are illustrated by being divided into two diagrams of (A) and (B) in Fig. 14 and Fig. 15 for convenience of description. However, the positions of the tray 4 and the support member 21' match in the x direction in the two diagrams of (A) and (B).

Out of the plurality of ribs which are provided at appropriate intervals along the x direction in the support member 21', the ribs which are indicated by the reference numeral 21 a are provided to be fixed and the ribs which are indicated by the reference numeral 21b are provided so as to be able to be displaced by sliding in the height direction. In a case where recording is performed on the sheet P with a width which is different to the lens sheet 80, the ribs 21a and 21b are positioned at the same height as the top section of the sheet P as shown in Fig. 14.

Cams 4c are respectively joined to the edge guides 4a' and 4b' which are provided so as to be able to be displaced by sliding in the x direction in the tray 4 where the lens sheet 80 is held. The cams 4c are provided in the lower sections of the ribs 21b so as to be able to be displaced by sliding in the x direction and are joined to the edge guides 4a' and 4b' by a linking rod which is omitted from the illustration in Fig. 14 and Fig. 15 and which extends from the lower side of the tray 4 to the lower side of the support member 21'.

When the edge guides 4a' and 4b' are displaced by sliding from the state in Fig. 14 to the edge position of the lens sheet 80 in order to perform recording on the lens sheet 80, the cams 4c engage with lower end sections 21c of the ribs 21b as shown in Fig. 15 and the ribs 21b are pushed upward.

Due to this, it is possible for the ribs 21b to guide both sides of the lens sheet 80.

That is, since the ribs 21b and 21b as well as the edge guides 4a' and 4b' which are provided in the tray 4 guide the edges of the lens sheet 80, in particular, it is possible to appropriately positionally align the lens sheet 80 while executing recording and it is possible to obtain a favorable recording result.

===(4)===

In the example described above, the printer 1 is a serial type of printer which performs recording while moving the recording head 9 in the x direction as shown in Fig. 16(A), but the printer 1 may be a line head type of printer which is provided with a recording head 9' which has a size which covers the entirety of the sheet in the width direction and which is fixed as shown in Fig. 16(B).

Here, the recording head 9 which ejects ink while moving in the x direction in Fig. 16(A) is provided with a plurality of nozzle rows 9a which are formed by arranging a plurality of ink ejecting holes along the transport direction of the lens sheet 80 and spaced at predetermined intervals along the x direction. That is, the direction in which the nozzle rows 9a extend and the direction in which the lenses Gk extend are parallel. In addition, the direction in which the nozzle rows 9a extend and transport direction of the lens sheet 80 are parallel. Here, one (one row) of the nozzle rows 9a is a nozzle row which ejects a predetermined coloring material (for example, one color out of yellow, cyan, magenta, and black).

In contrast to this, the recording head 9' shown in Fig. 6(B) is provided with a plurality of nozzle rows 9a which are formed by arranging a plurality of ink ejecting holes along a direction which is orthogonal to the transport direction of the lens sheet 80 and spaced at predetermined intervals along the transport direction of the lens sheet 80, but the direction in which the lenses Gk extend is the x direction and transporting is carried out by setting the edge 81A which is the reference as the front end. The single direction recording mode in this example is different to the example described above, and the medium and the recording head are relatively moved by the medium being moved instead of the recording head.

Even in a case of using the recording head 9' which has a size which covers the entirety of the sheet in the width direction and which is provided to be fixed as above, recording is performed from the edge 81A which is the reference toward the edge on the other side and it is possible to obtain a favorable recording result. Here, one (one row) of the nozzle rows 9a is a nozzle row which ejects a predetermined coloring material (for example, one color out of yellow, cyan, magenta, and black).

Here, in Fig. 16(A), the direction in which the nozzle rows 9a extend and the direction in which lenses Gk extend may intersect (for example, may be orthogonal). In addition, in Fig. 16(B), the direction in which the nozzle rows 9a extend and the direction in which lenses Gk extend may intersect (for example, may be orthogonal).

===(5)===

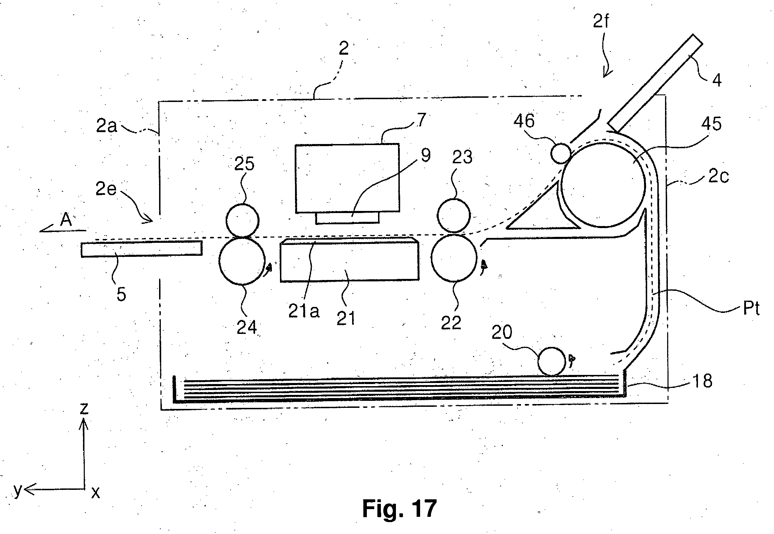

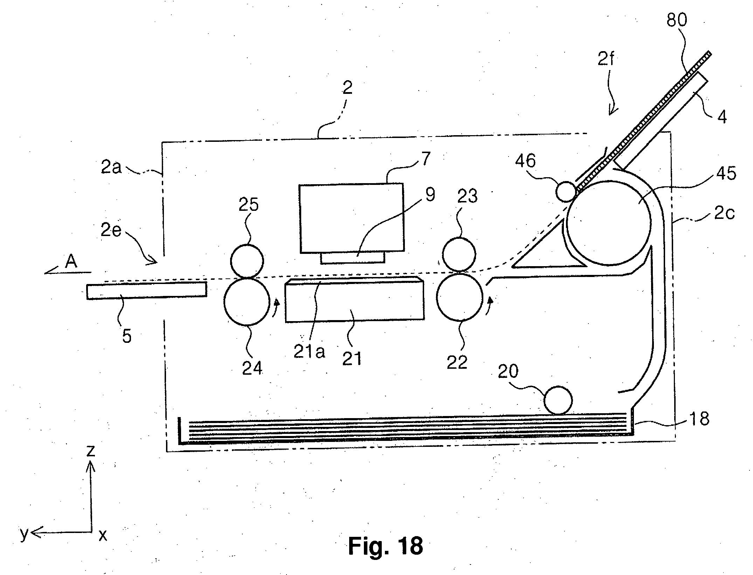

The medium transport path in the printer 1 may be configured as shown in Fig. 17 and Fig. 18. Fig. 17 and Fig. 18 are diagrams illustrating another embodiment of another medium transport path. In Fig. 17 and Fig. 18, the same reference numerals are given where the configuration is the same as the configuration shown in Fig. 8 and Fig. 9 and description thereof is omitted below.

In the medium transport path shown in Fig. 17 and Fig. 18, a tray 4', which is provided on the apparatus rear surface 2c side, is provided with an inclined posture instead of a horizontal posture. An opening 2f where it is possible for the medium to be inserted is formed in the upper surface of the apparatus.

In addition, an intermediate roller 45 which is driven to rotate and a driven roller 46 which is rotated by being driven are provided upstream of the first driving roller 22 and the first driven roller 23. The sheet P which is sent out from the sheet cassette 18 passes by the intermediate roller 45 as shown by the dashed line Pt in Fig. 17 and reaches the first driving roller 22 and the first driven roller 23 by being curved and inverted.

On the other hand, the lens sheet 80 is held in the tray 4'. At this time, the intermediate roller 45 is in a driving state and the front end of the lens sheet 80 which is held in the tray 4' is inserted between the intermediate roller 45 and the driven roller 46 and is sent toward the first driving roller 22 and the first driven roller 23. Here, since the lens sheet 80 has flexibility, it is possible for the lens sheet 80 to bend in the transport path between the intermediate roller 45 and the first driving roller 22.

Here, it is possible to execute control in order to correct skew in the lens sheet 80. For example, when the lens sheet 80 to which feeding force is applied from the intermediate roller 45 reaches the first driving roller 22, the first driving roller 22 rotates in the reverse rotation direction (the clockwise direction in Fig. 18) and the front end of the lens sheet 80 hits up against between the first driving roller 22 and the first driven roller 23 in this state. Since the intermediate roller 45 and the driven roller 46 are provided only at the central position in the width direction of the medium, it is possible for the lens sheet 80 to be rotated centered on the nip position using the intermediate roller 45 and the driven roller 46 when the front end of the lens sheet 80 hits up against between the first driving roller 22 and the first driven roller 23. Due to this, the skew in the lens sheet 80 is corrected.

Here, it is possible for the controlling in order to correct for skew in the sheet P which is sent out from the sheet cassette 18 to be different to the case of the lens sheet 80. For example, after the front end of the sheet P is taken into between the first driving roller 22 and the first driven roller 23 and the front end of the sheet P is sent to the downstream side (in the A direction) by a predetermined amount, the first driving roller 22 is reversed in a state where the intermediate roller 45 is stopped and the front end of the sheet P is discharged from between the first driving roller 22 and the first driven roller 23 to the upstream side. Due to this, the sheet P is bent between the first driving roller 22 and the intermediate roller 45, the front end of the sheet copies the shape between the first driving roller 22 and the first driven roller 23, and the skew is corrected.

The lens sheet 80 where recording is performed is discharged toward the tray 5 which is provided on the apparatus front surface 2a side and supported by the tray 5. Here, out of the sheets P which do not have a lens, it is possible for a sheet with strong resilience (with low flexibility) such as cardboard to be fed via the tray 4' in the same manner as the lens sheet 80.

===(6)===

As a liquid which is ejected from the recording head 9, it is possible to add liquids such as a coating agent which protects the ink absorbing layer 86 after ink is ejected with regard to the ink absorbing layer 86 of the lens sheet 80, or white ink which forms a base for printing, for example, an address or the like with regard to the ink absorbing layer 86 after an image is formed.

In this case, after the lens sheet 80 is sent out from the tray 4 on the apparatus rear surface and ejecting of ink is performed in order to form an image in the process of transporting the lens sheet 80 in an A direction, post-processes may be performed such as ejecting a coating agent or ejecting a white ink described above in the process of carrying out transporting in a B direction.

Furthermore, it is obvious that each of the constituent components described above is not limited to the contents which are disclosed and appropriate modifications are possible.

For example, the lens layer 83 of the lens sheet 80 is used as a lenticular lens, but another lens layer which is formed by arranging a plurality of lens bodies in lines, such as a fly array lens, may be used.

Additionally, the configuration in the present embodiment is a so-called on-carriage type where the ink cartridges 8A to 8D are mounted in the carriage 7, but the configuration may be a so-called off-carriage type where the ink cartridges 8A to 8D are provided independently from the carriage 7 and the ink cartridges 8A to 8D and the recording head 9 are connected with an ink tube. In this case, the ink cartridges 8A to 8D as ink accommodating sections may be either provided inside the housing 2 or provided outside the housing 2.

[Description of Reference Numerals]

1 INK JET PRINTER
2 HOUSING
2a FRONT SURFACE
2B UPPER SURFACE
2c REAR SURFACE
2d SHEET DISCHARGE OPENING
2e OPENING SECTION
2f OPENING
3 OPERATION PANEL
3A OPERATION SECTION
3b DISPLAY SECTION
4 TRAY
4a, 4b EDGE GUIDE
5 TRAY
7 CARRIAGE
8A-8D INK CARTRIDGE
9 INK JET RECORDING HEAD
10 CR MOTOR
11 DRIVING PULLEY
12 DRIVEN PULLEY
13 ENDLESS BELT
14 CAP
15 CARRIAGE GUIDE SHAFT
18 SHEET CASSETTE
20 FEEDING ROLLER
21 SUPPORT MEMBER
21 a, 21b RIB
22 FIRST DRIVING ROLLER
23 FIRST DRIVEN ROLLER
24 SECOND DRIVING ROLLER
25 SECOND DRIVEN ROLLER
27 PW SENSOR
27a LIGHT EMITTING SECTION
27b LIGHT RECEIVING SECTION
28 LINEAR SCALE
29 LINEAR ENCODER
30 CONTROLLER
31 ASIC
32 RAM
33 ROM
34 EEPROM
35 CPU
36 IF
37 CR CONTROL UNINT
38 PF CONTROL UNIT
39 PF MOTOR DRIVER
40 CR MOTOR DRIVER
41 HEAD DRIVER
42 PF MOTOR
43 ROTARY ENCODER
80 LENS SHEET
81A EDGE (REFERENCE SIDE)
81B EDGE
82A EDGE
82B EDGE
83 LENS LAYER
84 ADHESIVE LAYER
85 BASE LAYER
86 ABSORBING LAYER
87 CUTOUT PORTION
90 LABEL SHEET
91 BASE MATERIAL
92 DETACHABLE SHEET
93 DETACHABLE SHEET
95 TRAY
95a UPPER SURFACE
95b CONCAVE SECTION
95c CUTOUT PORTION
100 EXTERNAL COMPUTER
P RECORDING SHEET

**Claims**

1. A target recording medium (80) comprising:

   a lens layer (83) formed by arranging lenses, which extend in a first direction, in a plurality of lines in a second direction which is a direction orthogonal to the first direction; and a liquid absorbing layer (86) which absorbs liquid and which forms a surface on an opposite side of the target recording medium to a surface formed by the lens layer (83), wherein a width (W1) of a lens which is formed at an edge (81A) on one side of the lens layer (83) in the second direction is equivalent to a width (W1) of a lens which is adjacent to the lens which is formed at the edge (81A) on the one side, an overall shape of the target recording medium is a rectangle, and **characterized in that** one side edge (81A) and the other side edge (81B) in the first direction of the target recording medium or the second direction are formed with an asymmetric shape.

2. The target recording medium according to Claim 1, wherein the overall shape is a rectangle but one corner section (87) of the rectangle is cut out.

3. The target recording medium according to Claim 1 or 2, comprising an adhesive layer (84) between the lens layer (83) and the liquid absorbing layer (86) such that the lens layer and the liquid absorbing layer are attached to each other.

4. The target recording medium according to Claim 3, wherein a base layer (85) which improves overall rigidity is provided between the adhesive layer and the liquid absorbing layer.

5. The target recording medium according to Claim 4, wherein a focal point distance (f) with regard to incident light from a side of the lens layer is equivalent to a combined thickness of the lens layer (83), the adhesive layer (84), and the base layer (85).

**Patentansprüche**

1. Zielaufzeichnungsmaterial (80), umfassend:

eine Linsenschicht (83), welche durch Anordnen von Linsen, welche sich in einer ersten Richtung erstrecken, in mehreren Reihen in einer zweiten Richtung, welche eine Richtung rechtwinklig auf die erste Richtung ist, gebildet ist; und eine flüssigkeitsabsorbierende Schicht (86), welche Flüssigkeit absorbiert und welche eine Oberfläche auf einer Gegenseite des Zielaufzeichnungsmaterials zu einer Oberfläche, die durch die Linsenschicht (83) gebildet ist, bildet, wobei eine Breite (W1) einer Linse, welche an einer Kante (81A) auf einer Seite der Linsenschicht (83) in der zweiten Richtung gebildet ist, einer Breite (W1) einer Linse entspricht, welche an die Linse angrenzt, welche an der Kante (81A) auf der einen Seite gebildet ist, eine Gesamtform des Zielaufzeichnungsmaterials ein Rechteck ist, und **dadurch gekennzeichnet, dass** eine Seitenkante (81A) und die andere Seitenkante (81B) in der ersten Richtung des Zielaufzeichnungsmaterials oder der zweiten Richtung mit einer asymmetrischen Form gebildet sind.

2. Zielaufzeichnungsmaterial nach Anspruch 1, wobei die Gesamtform ein Rechteck ist, aber ein Eckenabschnitt (87) des Rechtecks ausgeschnitten ist.

3. Zielaufzeichnungsmaterial nach Anspruch 1 oder 2, eine Kleberschicht (84) zwischen der Linsenschicht (83) und der flüssigkeitsabsorbierenden Schicht (86) umfassend, sodass die Linsenschicht und die flüssigkeitsabsorbierende Schicht aneinander befestigt sind.

4. Zielaufzeichnungsmaterial nach Anspruch 3, wobei eine Basisschicht (85), welche eine Gesamtsteifheit verbessert, zwischen der Kleberschicht und der flüssigkeitsabsorbierenden Schicht bereitgestellt ist.

5. Zielaufzeichnungsmaterial nach Anspruch 4, wobei ein Brennpunktabstand (f), in Bezug auf einfallendes Licht von einer Seite der Linsenschicht, einer kombinierten Stärke der Linsenschicht (83), der Kleberschicht (84) und der Basisschicht (85) entspricht.

**Revendications**

1. Support d'enregistrement cible (80) comprenant :

une couche de lentilles (83) formée en disposant des lentilles, lesquelles s'étendent dans une première direction, en une pluralité de lignes dans une deuxième direction qui est une direction orthogonale à la première direction ; et une couche d'absorption de liquide (86) qui absorbe du liquide et qui forme une surface sur un côté opposé du support d'enregistrement cible par rapport à une surface formée par la couche de lentilles (83), dans lequel une largeur (W1) d'une lentille qui est formée sur un bord (81A) sur un côté de la couche de lentilles (83) dans la deuxième direction étant équivalente à une largeur (W1) d'une lentille qui est adjacente à la lentille qui est formée sur un bord (81A) sur ce côté,

une forme globale du support d'enregistrement cible étant rectangulaire, et
**caractérisé en ce que**
un bord latéral (81A) et l'autre bord latéral (81B) dans la première direction du support d'enregistrement cible ou la deuxième direction sont formés avec une forme asymétrique.

2. Support d'enregistrement cible selon la revendication 1, dans lequel
une forme globale est rectangulaire, mais une section d'angle (87) du rectangle étant découpée.

3. Support d'enregistrement cible selon la revendication 1 ou 2, comprenant une couche adhésive (84) entre la couche de lentilles (83) et la couche d'absorption de liquide (86) de telle sorte que la couche de lentilles et la couche d'absorption de liquide sont attachées l'une à l'autre.

4. Support d'enregistrement cible selon la revendication 3, dans lequel
une couche de base (85) qui améliore la rigidité globale est fournie entre la couche adhésive et la couche d'absorption de liquide.

5. Support d'enregistrement cible selon la revendication 4, dans lequel
une distance de point focal (f) compte tenu d'une lumière incidente depuis un côté de la couche de lentilles est équivalente à une épaisseur combinée de la couche de lentilles (83), de la couche adhésive (84), et de la couche de base (85).

EP 2 832 552 B1

**Fig. 1A**

**Fig. 1B**

Fig. 2

Fig. 3

**Fig. 4A**          **Fig. 4B**          **Fig. 4C**

Fig. 5

Fig. 6

**Fig. 7**

EP 2 832 552 B1

Fig. 8

EP 2 832 552 B1

EP 2 832 552 B1

**Fig. 9**

Fig. 10

**Fig. 11**

EP 2 832 552 B1

Fig. 12

**Fig. 13**

EP 2 832 552 B1

EP 2 832 552 B1

Fig. 14A

4a'    4    4b'

Fig. 14B

21a    21b    21a    21a    21b    21a

21'

21c    21c

4c    4c

z

y    x

Fig. 15A

Fig. 15B

**Fig. 16A**

**Fig. 16B**

EP 2 832 552 B1

**Fig. 17**

**Fig. 18**

**Fig. 19**

EP 2 832 552 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7281327 B
- JP 2010023230 A
- WO 0245968 A

- US 2013127941 A
- US 2007263296 A
- US 2007148375 A